# EUROPEAN PATENT APPLICATION

(11) **EP 1 868 387 A2**
(43) Date of publication of application: **19.12.2007**
(21) Application number: 07252415.0
(22) Date of filing: 14.06.2007
(51) Int. Cl.: H04N 7/18

(54) **Broadcast data receiver network**

(30) Priority: 16.06.2006 GB 0611949
(71) Applicant: Pace Micro Technology PLC, Saltaire, Shipley, BD18 3LF (GB)
(72) Inventor: Mountain, Dale, Shipley, BD18 3LF (GB)
(74) Representative: Wood, Graham

(57) **Abstract**

The invention relates to a connected network of broadcast data receivers of the type provided to receive data which is transmitted from a remote location and then process the data to generate video, audio and/or auxiliary information. The network connection in accordance with the invention allows at least one of the receivers to provide information relating to the usage of at least one of the further broadcast data receivers on the network. This allows the user of the first receiver to, for example, monitor the usage of another of the receivers and, if necessary take steps to control said usage depending on the material being generated, the time of usage or other selected parameters.

## Description

The present invention relates to broadcast data receivers (BDRs) and more specifically to a plurality of BDRs which are connected together typically, although not necessarily exclusively, via a local network.

Whilst the following description proceeds to describe the invention with respect to a local network provided within a single premises such as a residential house, it is to be understood that the local network can, in other embodiments, extend beyond a single premises to a number of premises which may, for example, be located in relatively close proximity.

It is often the case that a household will have a number of television sets in different rooms each independently controllable in order to allow simultaneous viewing of the same or different channels by different persons in the respective rooms. In particular, children frequently prefer to watch television in the privacy of their own rooms.

Parents are therefore faced with a decision as to whether or not to allow children to have a television sct, each with an independent broadcast data receiver (BDR) connected thereto in their own room. Clearly it would be advantageous if all the family were not restricted to watching the same programme in the same room. However providing a BDR in a child's room could allow the child access to potentially unsuitable broadcast material.

This problem is previously acknowledged and one known solution is to provide parental control systems which allow parents to set restrictions on those channels which are available for viewing selection. Parents can therefore be reassured to a certain extent that their children do not have access to certain channels which are known to broadcast inappropriate content. However different people's attitudes to what is and what is not appropriate vary significantly, and given that content which is broadcast on each channel is constantly changing, it is particularly difficult to ensure that parental control systems are sufficiently adaptable to take full account of individual preferences.

In view of the foregoing problems, the present invention aims to provide an improved arrangement in which the user of one BDR can take account of what is being watched on another BDR.

According to the present invention there is provided a system for monitoring the operation one or more broadcast data receivers, the system comprising a first broadcast data receiver which is connected to one or more further broadcast data receivers via a communication network, each of the broadcast data receivers arranged to process transmitted video, audio and/or auxiliary data received from at least one broadcaster so as to provide a corresponding programme output, typically via a display screen and speakers connected thereto wherein the first broadcast data receiver receives at least a portion of data which is, or is representative of data, processed by the one or more further broadcast data receivers and uses the said portion of data to provide an indication to a user of the first broadcast data receiver of the programme being output from the said one or more further broadcast data receivers.

Thus the present invention advantageously makes use of a network connection between the BDRs to allow at least one of the BDR's to receive and display information relating to other BDR's in a multiroom environment. A first user can therefore actively monitor the programme output being watched or listened to by the user of another BDR and thereby determine whether the programme output by the other BDR is suitable for viewing.

In one embodiment the first and further broadcast data receivers are connected to a server. The data for each of the BDRs is received via the server, thus providing a point in the network at which the data can be directed according to the present invention. Additionally, or else alternatively, the first and further BDRs may be directly connected such that video, audio and auxiliary data for a further BDR is received via the first BDR.

According to one embodiment, the first BDR and/or other BDR's generate an on-screen display (OSD) on a display screen connected thereto to indicate to the first user the content provided by the one or more further BDRs. The OSD may show the output of a further BDR by displaying the programme output being watched by the further user.

Additionally, or else alternatively, the OSD may display information relating to the programme output of the further BDR, such as the channel number, the programme name and/or a description of the programme content. In one embodiment, the OSD may be in a format similar to an electronic programming guide (EPG), such that information for a number of BDRs can be viewed at once in a combined table or grid format. Further information for each BDR or programme may be provided by selecting a particular programme or BDR cell from the table or grid.

The OSD may be provided as a full screen display, capable of providing details for a number of further BDRs at once. In this embodiment it is envisaged that the OSD will be temporary or only activated and deactivated upon a user request.

Alternatively, the OSD may be provided in a window in one portion of the screen only. In this embodiment the OSD may be permanently on screen without preventing viewing of programmes provided by the BDR connected to the display screen. Accordingly a smaller OSD may only display information relating to one or a selection of the further BDRs at a time.

According to one particular embodiment, the OSD may be provided as a pop-up display which is triggered a predetermined condition occurring. The predetermined condition may, for example, comprise a power on of another BDR, a change of channel of the other BDR or a change of channel to a restricted content channel.

Preferably the BDR's include a memory such that a log of the data relating to the programme output of that BDR and/or the data received relating to the programme output of the other further BDRs can be stored. The user of the first BDR need not therefore constantly monitor the data relating to the further BDRs but can easily assess the usage data over a period of time. This is of particular benefit if, for example, a parent is out and wishes to check on usage of the BDRs in their absence.

In one Embodiment the one or more further BDRs are capable of generating an OSD to indicate when data relating to a particular event has been sent to another BDR. Thus the user of a further BDR is informed of actions which arc monitored in order to encourage responsible viewing.

In addition, or else as an alternative to an OSD, the display panel of the BDR's or the television set to which it is connected may be used to display a channel number of the programme output of one or more further BDRs. Information is thus provided to the first user without interrupting viewing via the first BDR. The channel number for the further BDR may be provided in a different colour to the channel number for the particular BDR such that the two are easily distinguished. In one embodiment the display panel of the BDR may be provided with one or more lights to indicate whether any further BDRs are switched on. Typically the lights are in the form of LEDs.

It is to be noted that whilst the invention is described in terms of a first BDR monitoring one or more further BDRs, it is possible that any BDR within a network could monitor any other BDR by virtue of the local network connection.

Typically all BDRs would have the capability to monitor other BDRs and that capability can be selectively activated for certain BDRs within the network.

In a further aspect of the invention there is provided a system of connected BDR's, each independently operable to allow programme content to be selected for viewing and wherein said broadcast data receivers are connected as part of a network, each provided with the capability of allowing the user of that broadcast data receiver to monitor the usage of the other broadcast data receivers connected to the network.

According to a further aspect of the present invention, there is provided a broadcast data receiver arranged for connection to one or more further broadcast data receivers via a network, the broadcast data receiver arranged to process video, audio and/or auxiliary data recieved from a broadcaster so as to provide a corresponding programme output in response to a user selection, wherein the broadcast data receiver is arranged to receive at least a further portion of data, said data being indicative of the content output from one or more of the further broadcast data receivers.

In one embodiment, said portion of data is processed to provide a visual and/or audible indication of the programme output of the one or more further broadcast data receivers to a user watching and/or listening to the content output of the first broadcast data receiver.

Preferred embodiments of the present invention will now be described in further detail with reference to the following drawings, in which:
Figure 1 shows a general local network in accordance with the present invention; and,
Figure 2 shows a BDR according to the present invention.

The system described below allows for a parent or other user to monitor the viewing habits of other users to determine whether they are watching inappropriate material.

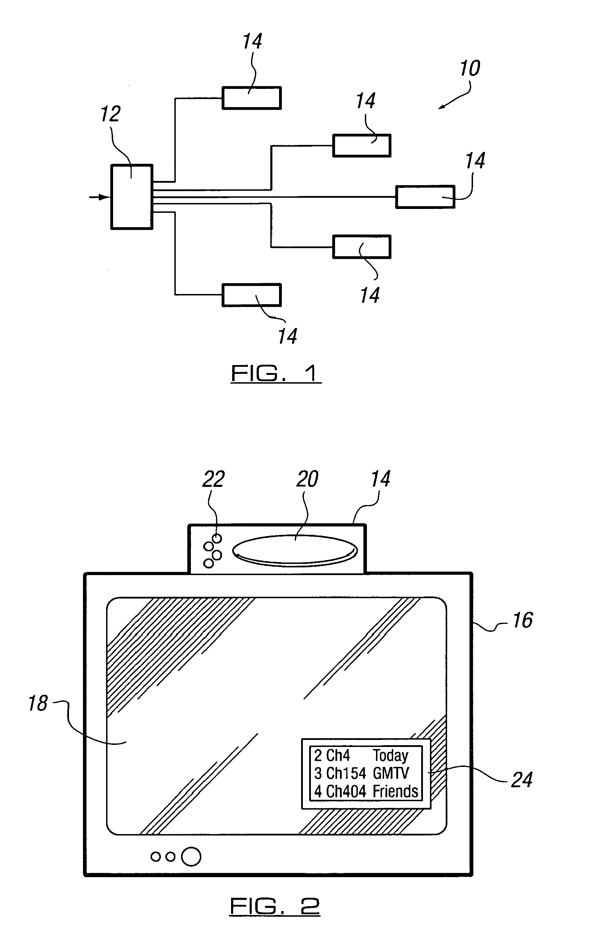

Turning firstly to figure 1 there is shown a local network 10 including a gateway server 12 and a number of BDRs in the form of set to boxes 14. The set top boxes 14 are connected to the server 12 such that any box 14 can potentially receive information from any other box in the local network. In an alternative arrangement it is possible that only one set top box is able to receive information from the other set top boxes via the gateway server.

In the arrangement shown data is received by each set top box from a broadcaster via the server 12.

The network may be arranged such that each set top box is arranged in a different room of a building.

Each set top box 14 is typically associated with a television set 16 as shown in figure 2 such that the received data is processed by the set top box 14 for display on the screen 18. The set top box 14 comprises a display panel 20 and one or more LEDs 22, which arc typically mounted in a front face of the set top box facing a user.

Whilst the set top box in figure 2 is shown as being connected to the television set, it is possible that a set top box according to the present invention could be integral with the television set and provided as a single unit.

During use, the set top box receives data corresponding to the broadcast data being received by one or more other set top boxes within the network 10. The data received is processed by the set top box to provide an indication of the content being displayed on the other set top boxes. The indication may include the display of the channel number for one or more further set top boxes within the display panel 20. Furthermore the set top box 14 may indicate whether each of the further set top boxes is switched on by illuminating an LED 22. A single LED may indicate whether any of the other set top boxes is switched on or else a number of LEDs may be provided, each LED providing an indication for a different set top box.

As shown in figure 2, the set top box 14 is also capable of producing an OSD 24 to provide information to the user of the content being received by the other set top boxes. The OSD is provided as a window which covers only a portion of the screen 18. The OSD 24 includes an indication of the channel to which each other set top box is tuned as well as information indicating the programme currently being broadcast on that channel. In the case of multiple other set top boxes, the OSD 24 may also display an identifier for each of the set top boxes being monitored, by way of a name or number.

The set top box 14 shown in figure 2 is thus capable of receiving auxiliary data for the other set top boxes. Additionally or else alternatively, the set top box 14 can receive the video and/or audio data which is being received by one or more of the other set top boxes such that the user can see exactly what is being shown on screen at any given time. The user may be able to select to view a programme from the OSD 24 or else may simply select a channel according to the channel number provided on the set top box display panel 20.

The set top box 14 includes a hard disk such that auxiliary data can be stored to build a log of the programmes watched via the other set top boxes over time. The log stores times and dates of programmes watched such that this information can be subsequently displayed to a user upon request.

The set top box 14 includes instructions to create a menu to allow a user to set preferences. The instructions provided include options for a user to set up monitoring preferences for the other set top boxes in the network. The setup menu allows a user to set which boxes are monitored and how they are informed of the content being shown. This may allow a user to be informed continually by way of an OSD 24 as shown in figure 2 or else by way of an intermittent display which appears at set time intervals or else which is only displayed in response to predetermined actions by a user of the other set top boxes.

In the event that the user of one set top box triggers a display to be provided, or else a log to be created on the monitoring set top box, the user of that set top box may be provided with a corresponding display to inform them that a trigger has occurred.

## Claims

1. A system for monitoring the operation of one or more broadcast data receivers, the system comprising a first broadcast data receiver which is connected to one or more further broadcast data receivers via a communication network, each of the broadcast data receivers arranged to process transmitted video, audio and/or auxiliary data received from at least one broadcaster so as to provide a corresponding programme output, typically via a display screen and speakers connected thereto wherein the first broadcast data receiver is arranged to receive at least a portion of data which is, or is representative of data, processed by the one or more further broadcast data receivers and uses said portion of data to provide an indication to a user of the first broadcast data receiver of the programme being output from the said one or more further broadcast data receivers.

2. A system according to claim 1 wherein a local connection network is provided between the said broadcast data receivers to allow at least one of the broadcast data receivers to display an indication relating to at least one of the other broadcast data receivers connected via the local network.

3. A system according to claim 1 wherein a user of a first broadcast data receiver can monitor the programme being watched by the user of a second broadcast data receiver and thereby determine whether the programme output by the second broadcast data receiver is suitable for viewing by that user.

4. A system according to claim 1 wherein the first and further broadcast data receivers are connected to a server.

5. A system according to claim 4 wherein the data for the programme output of each of the broadcast data receivers is received by the server and distributed to one or more further receivers to provide the indication of the programme output of the receivers.

6. A system according to claim 1 wherein the broadcast data receivers arc directly connected such that data for the said further broadcast data receiver is transmitted the first broadcast data receiver.

7. A system according to claim 1 wherein an on-screen display is generated to indicate to a user of a first broadcast data receiver the programme content which is or has been provided by the one or more further broadcast data receivers.

8. A system according to claim 7 wherein the on-screen display shows the programme output of a further broadcast data receiver by displaying the programme video being provided by the further broadcast data receiver.

9. A system according to claim 7 or 8 wherein the on-screen display shows information relating to the content of the programme being watched via the further broadcast data receiver.

10. A system according to claim 9 wherein the information is in the form of any or any combination of the programme channel number, the programme name and/or a description of the programme content.

11. A system according to claim 7 wherein the on-screen display is in the form of an electronic programme guide which shows information for the programme content of one or a number of further broadcast data receivers in a grid with each broadcast data receiver identified in conjunction with the programme content.

12. A system according to claim 11 wherein further information for the programme content on any particular further broadcast data receiver can be obtained by the user selecting a particular cell of the grid relating to a specific programme or specific broadcast data receiver.

13. A system according to claim 7 wherein the on-screen display is provided as a full screen display and may be temporarily displayed in response to a user request.

14. A system according to claim 7 wherein the on-screen display is provided in a window in a portion of the display screen.

15. A system according to claim 7 wherein the onscreen display is provided as a pop-up display which is triggered when a predetermined condition of the system occurs.

16. A system according to claim 15 wherein the predetermined condition comprises any or any combination of the switching on of a receiver, a change of channel, and/or a change of channel to a channel showing a restricted content.

17. A system according to claim 1 wherein the first broadcast data receiver includes a memory in which a log of the data received from the further broadcast data receivers can be kept.

18. A system according to claim 17 wherein the log of data can be selectively accessed by the user of the first broadcast data receiver.

19. A system according to claim 7 wherein each of the broadcast data receivers are capable of receiving data indicative of the programme content of the other broadcast data receivers connected thereto.

20. A system according to claim 1 wherein each receiver can generate an on-screen display to indicate when data relating to the receivers programme content has been sent to another broadcast data receiver.

21. A system according to claim 1 wherein the receivers are provided with a display panel provided with one or more visual means to indicate whether any further broadcast data receivers arc switched on at that time.

22. A system according to claim 1 wherein the data representative of the programme output of each broadcast data receiver is stored in a memory in that receiver to provide a database of programme output in a time period.

23. A system according to claim 22 wherein said database data can be transmitted to at least one of the other broadcast data receivers upon receipt of a request from the other receiver or at predetermined time intervals.

24. A system of connected broadcast data receivers, each independently operable to allow programme content to be selected for viewing and wherein said broadcast data receivers are connected as part of a network, each provided with the capability of allowing the user of that broadcast data receiver to monitor the usage of the other broadcast data receivers connected to the network.

25. A broadcast data receiver arranged for connection to one or more further broadcast data receivers via a network, the broadcast data receiver arranged to process video, audio and/or auxiliary data received from a broadcaster so as to provide a corresponding programme output in response to a user selection, wherein the broadcast data receiver is arranged to receive at least a further portion of data, said data being indicative of the content output from one or more of the further broadcast data receivers.

26. A broadcast data receiver according to claim 25 wherein the said portion of data is processed to provide a visual and/or audible indication of the programme output of the one or more further broadcast data receivers to a user watching and/or listening to the programme output of the first broadcast data receiver.
